# EUROPÄISCHE PATENTSCHRIFT

(11) **EP 3 586 024 B1**
(45) Veröffentlichungstag und Bekanntmachung des Hinweises auf die Patenterteilung: **29.07.2020**
(21) Anmeldenummer: 17706748.5
(22) Anmeldetag: 22.02.2017
(51) Int. Cl.: F16D 3/84

(54) **ROLLBALG MIT MINDESTENS EINER VERSTEIFUNGSRIPPE**
ROLLING BOOT COMPRISING AT LEAST ONE REINFORCEMENT FIN
SOUFFLET TUBULAIRE COMPRENANT AU MOINS UNE NERVURE DE RENFORCEMENT

(43) Veröffentlichungstag der Anmeldung: 01.01.2020
(73) Patentinhaber: GKN Driveline International GmbH, 53797 Lohmar (DE)
(72) Erfinder: DEISINGER, Markus, 53721 Siegburg (DE); BALLAS, Daniela, 42859 Remscheid (DE); BUSCH, Winfried, 53773 Hennef (DE); WOLF, Olaf, 53721 Siegburg (DE); BENDER, Bernd, 50858 Köln (DE)
(74) Vertreter: Geskes, Christoph
(86) Internationale Anmeldenummer: PCT/EP2017/054005
(87) Internationale Veröffentlichungsnummer: WO 2018/153440

(56) Entgegenhaltungen:
- WO-A1-2009/155956
- WO-A1-2013/043187
- DE-B3-102006 027 048
- US-A- 4 826 466
- US-A1- 2007 173 337

## Beschreibung

Die vorliegende Erfindung betrifft einen Rollbalg mit mindestens einem ersten Befestigungsbereich, einem zweiten Befestigungsbereich, einen im ersten Befestigungsbereich benachbarten Übergangsbereich und einem sich daran anschließenden Membranbereich, als auch ein Gleichlaufgelenk, eine Welle und ein Gelenkanordnung mit einem solchen erfindungsgemäßen Balg.

Rollbalge der eingangs genannten Art sind vielfältig aus dem Stand der Technik bekannt. So offenbart WO 2009/155955 A1 einen Rollbalg zur Befestigung auf einem Verschiebegelenk, welcher verbesserte Eigenschaften bei angreifenden hohen Zentrifugalkräften aufweisen soll, insbesondere in Hinblick auf den dann auf den Rollbalg wirkenden Fettdruck. Hierzu wird eine bestimmte Geometrie zwischen einem Übergangsbereich und einem Membranbereich vorgeschlagen und insbesondere auch die Anordnung äußerer radialer Rippen, die den Übergangsbereich überspannen und mit einer Oberfläche eines ersten Membranteils des Membranbereiches verbunden sind. Der dort offenbarte Faltenbalg soll einerseits angreifenden Fettdruck reduzieren, andererseits vermeidet er aufgrund seiner spezifischen Geometrie die Anordnung innerer Versteifungsrippen, wie diese aus dem Stand der Technik, wie in der WO 2009/155955 A1 oder WO 2009/155956 A1 offenbart, bekannt war.

WO 2013/170867 A1 offenbart eine Weiterentwicklung des Rollbalges gemäß der WO 2009/155955 A1 oder der WO 2009/155956 A1 mit einer verbesserten Formstabilität. Diese wird erzielt durch eine spezifische Ausgestaltung von Durchmessern des Übergangsbereiches zu solchen des Membranbereiches. Auch dort können äußere radiale Rippen im Übergangsbereich, ähnlich wie in der WO 2009/155955 A1 oder der WO 2009/155956 A1 offenbart, vorgesehen sein.

WO 2013/043187 A1 offenbart ein Gleichlaufgelenk mit einer spezifischen Abdichtung, die aus einem starren Teil und einem flexiblen Teil besteht, wobei das flexible Teil ein nach außen wegweisendes offenes Ende aufweist. US 2007/0173337 A1 offenbart einen Rollbalg, der durch ein Stützungsteil an einem Gelenkgehäuse gehalten ist. DE 10 2006 027 048 B3 offenbart einen Balg mit einem Knickschutz für mehrteilige Gelenkwellen, wobei der Knickschutz in den Faltenbalg integriert ist.

Die Anforderungen an Rollbalge in modernen Getrieben bzw. Gelenkanordnungen von Nutz- und Kraftfahrzeugen steigen insbesondere in Bezug auf deren Festigkeiten bei höheren Drehzahlen. Insbesondere aufgrund der Zunahme der Elektromobilität und den in Automobilen eingesetzten alternativen Antriebssystemen, insbesondere in Hinblick auf den Einsatz von Elektromotoren, werden höhere Drehzahlen eingesetzt werden, so dass Rollbalge den bei hohen Umdrehungen entstehenden weiter gesteigerten Zentrifugalkräften standhalten müssen. Diese wirken einerseits auf das im Balg vorhandene Fett, die sogenannte Fettladung, als auch auf das Balgmaterial selbst. Bei hohen Drehzahlen kommt es daher bei den aus dem Stand derTechnik bekannten Faltenbalgen zu verschiedensten Problemen. Insbesondere erfolgt eine Aufweitung der Rollbalge in den Übergangsbereichen, hervorgerufen insbesondere durch die Fettladung, als auch eine Verformung des Membranbereiches. Durch letztere kommt es zu geringeren Lebensdauern aufgrund Materialerschöpfung. Die Aufweitung insbesondere im Übergangsbereich hingegen kann zu unerwünschtem Kontakt zu benachbarten Bauteilen als auch zu einer verminderten Schmierung benachbarter Gelenkteile, insbesondere von Verschiebegelenken einschließlich Gleichlaufgelenken, führen. Zudem erfolgt nahe dem ersten Befestigungsbereich von Rollbalgen, die dem Gelenkgehäuse zugewandt sind, eine Abhebung des im Bereich einer Gelenkgehäusekante an dem Gelenkgehäuse üblicherweise anliegenden Rollbalg.

Es ist daher Aufgabe der vorliegenden Erfindung, die Steifigkeit der aus dem Stand der Technik bekannten Faltenbalge zu verbessern, so dass diese auch bei hohen Umdrehungszahlen die an diese gestellten Anforderungen, insbesondere in Hinblick auf deren Lebensdauer als auch zur Erzielung einer ausreichenden Fettung eines Gelenkes, erfüllen können.

Diese Aufgabe wird erfindungsgemäß gelöst durch einen eingangs genannten Rollbalg mit einem ersten Befestigungsbereich, einem zweiten Befestigungsbereich, einem dem ersten Befestigungsbereich benachbarten Übergangsbereich und einem sich daran anschließenden Membranbereich, umfassend ein erstes Membranteil und ein zweites Membranteil, die über ein Rundungsteil miteinander verbunden sind, wobei auf einer Außenseite des Übergangsbereiches mindestens eine, bevorzugt genau eine, umlaufende Versteifungsrippe und zwischen Versteifungsrippe und dem ersten Membranteil des Membranbereiches eine Mehrzahl von Stützrippen angeordnet sind, und wobei der Übergangsbereich die Versteifungsrippe und ein Wandteil umfasst, an dem die Versteifungsrippe angeordnet ist, wobei das Wandteil an das erste Membranteil des Membranbereiches unmittelbar anschließt. Bevorzugt ist dabei genau eine umlaufende Versteifungsrippe vorgesehen. Bevorzugt bildet die umlaufende Versteifungsrippe einen geschlossenen Kreisring auf der Außenseite des Übergangsbereiches. Sind zwei oder mehr Versteifungsrippen ausgebildet, so sind diese bevorzugt im Wesentlichen parallel zueinander an der Außenseite des Übergangsbereiches angeordnet. Die Erfinder haben erkannt, dass bei hohen Umdrehungszahlen ein mit einer Fettladung versehener Faltenbalg im Wesentlichen tangentialen Kräften ausgesetzt ist. Durch die radialen, aus dem Stand derTechnik bekannten Außenrippen können jedoch diese angreifenden tangentialen Kräfte nicht abgeleitet werden, vielmehr werden diese bei hohen Umdrehungszahlen einfach nach außen mitverschoben, ohne die radiale Steifigkeit eines Rollbalges zu verbessern. Eine Erhöhung der Wandstärke des Rollbalges, die auch geeignet wäre, die radiale Steifigkeit zu verbessern, hätte zu höheren Herstellungskosten und ggf. einer verringerten Qualität der Rollbalge geführt. Gesteigerte Kosten wären auch bei Einsatz von Verstärkungsfasern, insbesondere solchen, die tangential ausgerichtet wären, im Rollbalgmaterial zu erwarten gewesen. Als werkzeugtechnisch und auch kostengünstig umzusetzende Alternative hierzu sind die Erfinder auf die erfindungsgemäße Lösung der Anordnung mindestens einer umlaufenden Versteifungsrippe auf einer Außenseite des Übergangsbereiches verfallen. Durch diese mindestens eine Versteifungsrippe werden die tangential angreifenden Kräfte über diese auch bei höheren Umdrehungszahlen aufgefangen, so dass letztendlich eine Verbesserung der radialen Steifigkeit des Rollbalges bei hohen Umdrehungszahlen erzielt ist.

In einer bevorzugten Ausführungsform des erfindungsgemäßen Faltenbalges ist die Versteifungsrippe an dem Wandteil des Übergangsbereiches im Wesentlichen senkrecht zu einer Innenfläche des Wandteiles angeordnet. Die Versteifungsrippe kann auch als im Wesentlichen senkrecht zu einer oberen Seite eines Bindersitzbereiches des ersten Befestigungsbereiches, ausgebildet angesprochen werden. Die mindestens eine Versteifungsrippe selbst weist eine obere Seite und eine untere Seite auf, die weiter bevorzugt leicht zueinander geneigt sind. Der Neigungswinkel liegt dabei bevorzugt in einem Bereich von etwa 0,5° bis etwa 10°, weiter bevorzugt in einem Bereich von etwa 1 ° bis etwa 7,5°.

In einer weiter bevorzugten Ausführungsform ist die mindestens eine Versteifungsrippe am Übergangsbereich verschoben auf das ersteMembranteil des Membranbereiches angeordnet. Der Membranbereich umfasst den ersten, dem Übergangsbereich benachbarten Teilbereich und daran anschließend einen zweiten Membranteil, der als trogartig ausgebildet angesprochen werden kann. Der erste Membranteil und der zweite Membranteil sind durch ein Rundungsteil miteinander verbunden, wobei das Rundungsteil in einer Draufsicht auf den erfindungsgemäßen Faltenbalg eine Art kreisförmig umlaufende Erhebung in Art einer Faltenspitze ausbildet. Um so näher die mindestens eine Versteifungsrippe, bevorzugt genau eine Versteifungsrippe, dem Membranbereich, und damit dem ersten Membranteil, angeordnet ist, d. h. je geringer ein Durchmesser der mindestens einen umlaufenden Verstärkungsrippe ist, um so geringer sind die an diese angreifenden Zentrifugalkräfte, so dass eine verbesserte Reduzierung der tangential angreifenden Kräfte erreichbar ist. Insbesondere ist eine Höhe h₁ zwischen einer oberen Fläche des ersten Membranteils, die der dieser benachbarten ersten Verstärkungsrippe, bevorzugt genau einer Verstärkungsrippe, zugewandt ist, und einer unteren Fläche der Verstärkungsrippe kleiner als eine Höhe h₂ zwischen einer unteren Fläche eines Überstandes des ersten Befestigungsbereiches, soweit vorhanden, so nicht vorhanden, einer Unterseite des ersten Befestigungsbereiches, und einer dieser zugewandten und benachbarten oberen Fläche mindestens einer Versteifungsrippe, bevorzugt genau einer Versteifungsrippe. Dabei werden die Höhen h₁ und h₂ unmittelbar an der Außenseite des Übergangsbereiches bestimmt. Der Überstand weist neben seiner unteren Flächen eine obere Fläche auf, die bevorzugt ein zweites Positionierungselement des ersten Befestigungsbereiches trägt. Die obere Fläche des Überstandes ist bevorzugt im Wesentlichen eben mit einer Oberseite des ersten Bindersitzbereiches ausgebildet. Weiterhin weist der Überstand bevorzugt eine Stirnfläche zwischen unterer Fläche und oberer Fläche auf. Die Stirnfläche kann dabei bevorzugt stetig, das heißt ohne Versprung, in eine Stirnfläche einer Radialrippe, wie weiter unten nähergehend beschrieben, übergehen und insbesondere mit dieser eine gemeinsame, ebene und versprungfreie Fläche bilden. Bevorzugt liegt das Verhältnis der Höhen h₁:h₂ in einem Bereich von etwa 0,15 bis etwa 0,93, weiter bevorzugt in einem Bereich von etwa 0,2 bis etwa 0,9, noch weiter bevorzugt in einem Bereich von 0,58 bis etwa 0,88.

Der Übergangsbereich des erfindungsgemäßen Rollbalges umfasst das Wandteil und die an der Außenseite des Übergangsbereiches angeordnete mindestens eine Versteifungsrippe. Der Übergangsbereich geht in den Membranbereich unmittelbar über, indem der erste Membranteil bevorzugt unmittelbar an den Wandteil anschließt. Der Anschluss ist dabei bevorzugt materialeinheitlich ausgebildet.

Auf der dem Membranteil abgewandten Seite ist der Übergangsbereich begrenzt durch den ersten Befestigungsbereich, insbesondere durch eine Unterseite eines Bindersitzbereiches, die von dem ersten Befestigungsbereich umfasst ist.

In einer weiter bevorzugten Ausführungsform der vorliegenden Erfindung ist zwischen der unteren Fläche der Versteifungsrippe und der oberen Fläche des ersten Membranteils des Membranbereiches ein Winkel α in einem Bereich zwischen etwa 0° und etwa 25°, bevorzugt in einem Bereich zwischen etwa 1,5° und etwa 22°, noch weiter bevorzugt in einem Bereich zwischen etwa 2° und etwa 20°, gebildet. Durch die Abwinkelung kann insbesondere die Bauform im Bereich des Membranteils reduziert werden, so dass bei höheren Umdrehungszahlen ein Kontakt mit benachbarten Bauteilen bei einer Aufweitung des Membranbereiches vermeidbar ist.

Soweit in der vorliegenden Erfindung der Begriff "etwa" oder "im Wesentlichen" in Bezug auf Werte, Wertbereiche oder werthaltige Begriffe wie "senkrecht" verwendet wird, ist hierunter dasjenige zu verstehen, was der Fachmann in dem gegebenen Zusammenhang als fachmännisch üblich ansehen wird. Insbesondere sind Abweichungen der angegebenen Werte, Wertbereiche oder werthaltigen Begriffe von +/- 10%, bevorzugt +/- 5%, weiter bevorzugt +/- 2%, von dem Begriff "etwa" und dem Begriff "im Wesentlichen" umfasst.

Erfindungsgemäß ist zwischen der mindestens einen Versteifungsrippe und dem ersten Membranteil des Membranbereiches eine Mehrzahl von Stützrippen angeordnet. Bevorzugt sind mindestens zehn, weiter bevorzugt mindestens zwanzig, noch weiter bevorzugt mindestens dreißig und noch weiter bevorzugt mindestens vierzig Stützrippen vorgesehen. Diese Stützrippen greifen an der unteren Fläche mindestens einer Versteifungsrippe, die dem ersten Membranteil des Membranbereiches zugeordnet und benachbart ist, an, und können in einer weiteren Ausführungsform über die untere Fläche dieser Versteifungsrippe vorstehen, so dass sich ein Absatz ausbildet. Bevorzugt ist jedoch, im Querschnitt entlang einer Mittelachse des Rollbalges gesehen, ein glatter, d. h. stetiger, Übergang zwischen dieser Versteifungsrippe und den Stützrippen. Stirnflächen der Versteifungsrippen und der Stützrippen gehen bevorzugt versprungfrei ineinander über, es kann dabei aber auch ein Absatz ausgebildet sein. Die Stützrippen greifen auf der der benachbarten Versteifungsrippe zugewandten oberen Fläche des ersten Membranteils an, bevorzugt über die gesamte sich radial nach außen erstreckende Fläche desselben. Bevorzugt ist dabei ein Übergang der Versteifungsrippen, im Querschnitt gesehen, in den Membranbereich glatt, d. h. stetig, ausgebildet. Bevorzugt erfolgt der Übergang im Bereich des ersten Membranteils und/oder des diesem benachbarten Rundungsteils des Membranbereiches. In einer weiter bevorzugten Ausführungsform ist die weiter oben bereits definierte Höhe h₁, die auch zugleich eine Höhe der Stützrippen definiert, so gering wie möglich ausgebildet. Bevorzugt liegt dabei das Verhältnis der Höhen h₁ und h₂ in den vorstehend definierten Bereichen. Hierdurch wird erzielt, dass die Höhen h₁ der Stützrippen nicht allzu hoch sind, so dass hierdurch deren Gewicht, insbesondere in Hinblick auf die Vielzahl der am erfindungsgemäßen Rollbalg angeordneten Stützrippen, reduziert wird, und diese zudem eine ausreichende Steifigkeit aufweisen, so dass diese nur ein schwaches Biegeverhalten zwischen dem ersten Membranteil und der diesem benachbarten Versteifungsrippe bei hohen Umdrehungszahlen aufweisen. Sind zwei oder mehr Versteifungsrippen ausgebildet, so können zwischen diesen ebenfalls Stützrippen wie vorstehend beschrieben, ausgebildet sein.

In einer weiter bevorzugten Ausführungsform des erfindungsgemäßen Rollbalges sind die Stützrippen und die mindestens eine Versteifungsrippe im Wesentlichen senkrecht zueinander angeordnet. Hierdurch ist positiv das Biegeverhalten der Stützrippen beeinflusst, d. h. deren Neigung zur Biegung bei hohen Umdrehungszahlen ist weiter reduziert.

In einer weiter bevorzugten Ausführungsform des erfindungsgemäßen Rollbalges ist oberhalb der mindestens einen Versteifungsrippe eine Mehrzahl von Radialrippen angeordnet. Oberhalb im Sinne der vorliegenden Erfindung bezieht sich auf einen oberhalb der Versteifungsrippe angeordneten Bereich, einseitig begrenzt durch eine obere Fläche der mindestens einen Versteifungsrippe. Bei mehreren Versteifungsrippen bezeichnet die Angabe "oberhalb" den Bereich einer oberen Fläche derjenigen Versteifungsrippe, die dem ersten Befestigungsbereich am nächsten ist. In einer Ausführungsform ist die obere Fläche der Versteifungsrippe benachbarter unteren Fläche des Überstandes des ersten Befestigungsbereiches. Die Höhe h₂ des Bereiches oberhalb dieser Versteifungsrippe ist wie oben definiert. Bevorzugt ist ein Übergang zwischen der mindestens einen Versteifungsrippe und der Mehrzahl der Radialrippen, im Querschnitt gesehen, glatt, d. h. stetig, ausgebildet, so dass hier insbesondere kein Versprung vorliegt. Eine Ausbildung eines Versprungs, d. h. eine unstetige Ausbildung, wäre jedoch auch möglich. Bevorzugt ist der Übergang der Radialrippen in einen Überstand des ersten Befestigungsbereiches, so vorhanden, glatt, d. h. stetig, ausgebildet, so dass hier kein Versprung vorliegt. Die Radialrippen sind bevorzugt unterhalb des Überstandes angeordnet. Bevorzugt sind sie mit einer unteren Fläche des Überstandes verbunden. Weiter bevorzugt überragen die Radialrippen eine Stirnfläche des Überstandes nicht. Noch weiter bevorzugt bilden die Radialrippen mit ihrer Außenkante beziehungsweise Stirnfläche eine gemeinsame Ebene und versprungfreie Fläche mit der Stirnfläche des Überstandes. Aber auch hier wäre eine Ausgestaltung mit einem Versprung, d. h. eine nicht stetige Ausbildung, möglich. Bei einer solchen nicht stetigen Ausbildung steht die Radialrippe über eine Außenkante des Überstandes und/oder der mindestens einen Versteifungsrippe über. Bevorzugt sind mindestens zehn, weiter bevorzugt mindestens zwanzig, noch weiter bevorzugt mindestens dreißig Radialrippen vorgesehen. Weiter bevorzugt sind mehr Stützrippen als Radialrippen vorgesehen. Besonders bevorzugt sind in etwa doppelt so viele Radialrippen wie Stützrippen vorgesehen. Das Verhältnis der Anzahl der Radialrippen zu den Stützrippen liegt in einem Bereich von etwa 0,2 bis etwa 0,8, weiter bevorzugt in einem Bereich von etwa 0,3 bis etwa 0,7, und noch weiter bevorzugt in einem Bereich von etwa 0,4 bis etwa 0,6.

In einer weiter bevorzugten Ausführungsform sind die Stützrippen und die Radialrippen im Wesentlichen fluchtend miteinander ausgebildet. Dies bedeutet, dass diese zusammen mit der mindestens einen Versteifungsrippe eine gemeinsame Außenkante beziehungsweise Stirnfläche bilden. Diese gemeinsame Außenkante beziehungsweise Stirnfläche ist bevorzugt glatt, d. h. stetig, ausgebildet, d. h. weist keine Versprünge auf. Jedoch kann diese gemeinsame Außenkante beziehungsweise Stirnfläche, gebildet durch Stützrippen, die mindestens eine Versteifungsrippe und Radialrippen, auch mit Versprüngen versehen sein. Bevorzugt ist die gemeinsame Außenkante beziehungsweise Stirnfläche der mindestens einen Versteifungsrippe, der Radialrippen und der Stützrippen bogenförmig ausgebildet, d. h. stellt einen Kurvenabschnitt dar. Die gemeinsame Außenkante beziehungsweise die jeweiligen Stirnflächen der verschiedenen Rippen können aber auch unstet ausgebildet sein. Es kann auch vorgesehen sein, dass Stützrippen und Radialrippen nicht fluchtend miteinander ausgebildet sind. In diesem Fall sind diese dann versetzt zu einander auf der Außenseite des Übergangsbereiches des erfindungsgemäßen Rollbalges angeordnet. Dabei können deren Außenkanten beziehungsweise Stirnflächen gleichwohl stetig, aber auch mit einem Versprung in eine entsprechende Stirnfläche der umlaufenden Versteifungsrippe übergehen.

Eine Länge der mindestens einen Versteifungsrippe, im Querschnitt gesehen und bestimmt ausgehend von einer Außenseite des Wandteils, kann in verschiedenen Bereichen variieren. Die maximale Länge ist in etwa beschränkt durch eine maximale Länge des ersten Membranteils bzw. eine Höhe des Membranteils, bestimmt zwischen der Innenseite des Wandteils des Übergangsbereiches und einer hierzu parallelen Tangente im Rundungsteil des Membranabschnitts. Bevorzugt weist die mindestens eine Versteifungsrippe eine Länge auf, die etwa einem 0,3-fachen bis etwa einem 0,9-fachen, weiter bevorzugt etwa einem 0,5-fachen bis etwa einem 0,8-fachen, einer Länge einer oberen Fläche des ersten Membranteils entspricht. Eine maximale Breite, im Querschnitt gesehen, der Stützrippen ist beschränkt durch eine parallel zu der Innenseite des Wandabschnitts des Übergangsbereiches verlaufende Tangente durch den Rundungsteil des Membranbereiches. Eine maximale Breite der Radialrippen, im Querschnitt gesehen, ist vorzugsweise beschränkt durch die maximale Länge der mindestens einen Versteifungsrippe.

Bevorzugt weist der erste Befestigungsbereich einen Überstand auf. Der Überstand kann dabei vorzugweise einen Teilbereich des ersten Bindersitzbereiches umfassen, ebenso wie ein äußeres Positionselement des ersten Befestigungsbereiches, welches eine Begrenzung für ein im Bindersitzbereich anzuordnendes Bindemittel darstellt. Da bei Vorsehung von Radialrippen der Überstand über seine untere Fläche mit diesen verbunden und damit durch die Radialrippen abgestützt wird, wird hierdurch ein Abbiegen des Rollbalges im Bereich einer Gelenkgehäuseaußenkante erschwert, wenn nicht gar vermieden, so dass hierdurch die radiale Steifigkeit weiter erhöht ist. Der Überstand bezieht sich auf den Bereich des ersten Befestigungsbereiches, der bezogen auf die Innenfläche des Wandteils des Übergangsbereiches und damit bezogen auf eine Gelenkgehäuseaußenkante, die an der Innenseite des Wandbereiches anliegt, über diese hervorsteht.

In einer alternativen Ausführungsform weist der erste Befestigungsbereich keinen Überstand auf. Ein zweites, dem Membranbereich näherliegendes Positionierungselement ist dann beispielsweise in Richtung auf das mindestens eine erste Positionierungselement zu hinverschoben im ersten Befestigungsbereich angeordnet und definiert zusammen mit den ersten Positionierungselementen den ersten Bindersitzbereich. Eine derartige Ausgestaltung ist insbesondere dann bevorzugt, sollte das mindestens eine zweite Positionierungselement im Bereich des Überstandes der vorbeschriebenen Ausführungsform angeordnet sein. Ein Bindemittel, mittels welchem über den ersten Befestigungsbereich und den ersten Bindersitzbereich der erfindungsgemäße Rollbalg an einem Gelenkgehäuse befestigbar ist, ist zwischen den mindestens einen ersten und dem mindestens einen zweiten Positionierungselement anordenbar. In einer weiteren alternativen Ausführungsform kann vorgesehen sein, dass das mindestens eine zweite Positionierungselement entfällt in dem Sinne, dass dessen Positionierungsfunktion übernommen wird von einer Mehrzahl von Radialrippen. Dabei müssen nicht alle Radialrippen eine solche Positionierungsfunktion übernehmen, bevorzugt ist jedoch, dass sämtliche Radialrippen eine entsprechende Positionierungsfunktion übernehmen. Bei einer derartigen Ausgestaltung überragen die Positionierungsrippen eine Oberseite des ersten Bindersitzbereiches und weisen eine Anlage- oder Positionierungsfläche auf, die dem ersten Bindersitzbereich und damit auch dem mindestsens einen ersten Positionierungselement zugewandt ist und daher ein ersten Positionierungsbereich mit definiert. Zu einer Anlage mit dem Bindemittel kann, muss es aber nicht kommen. Das mindestens eine erste Positionierungselement kann dabei, wie bereits vorstehend beschrieben, beispielsweise ohrförmig ausgebildet sein. Die Anlage- beziehungsweise Positionierungsfläche, die durch die Radialrippen zur Verfügung gestellt ist, weist dabei bevorzugt eine im Wesentlichen viereckige Form auf. Insbesondere bei einer solchen Ausführungsform mit einer Mehrzahl von Radialrippen, von welchen zumindest einige eine Anlagefläche zur Verfügung stellen, die auch als Positionierungsfläche angesprochen werden kann, um eine Anordnung eines Bindemittels im ersten Bindersitzbereich des ersten Befestigungsbereiches zur Verfügung zu stellen, wird die Höhe h₂ bestimmt ausgehend von einer Unterseite des ersten Befestigungsbereiches, und, wie bereits vorbeschrieben, einer Oberfläche derjenigen Verstärkungsrippe, die dem ersten Befestigungsbereich am nächsten zugeordnet ist.

Der erste Bindersitzbereich kann im Sinne der vorliegenden Erfindung unterschiedlich ausgestaltet sein. So kann dieser eine im Wesentlichen ebene Oberseite aufweisen. Auf der Oberseite können jedoch auch Rippenelemente, insbesondere in Form von umlaufenden Rippen, bevorzugt mindestens zwei, weiter bevorzugt mindestens drei, vier, fünf oder mehr solcher, insbesondere umlaufender, Rippenelemente, nebeneinander angeordnet sein. Diese stehen über die Oberseite des ersten Bindersitzbereiches hervor. Insbesondere bei Schließung eines Bindemittels, angeordnet im ersten Bindersitzbereich, führen solche Rippenelemente beziehungsweise umlaufenden Rippen zu einer verbesserten Verteilung der Schließkräfte durch das Material des ersten Befestigungsbereiches. Auch eine Unterseite des ersten Befestigungsbereiches eines erfindungsgemäßen Rollbalges kann unterschiedlich ausgebildet sein. Diese kann vollständig eben ausgebildet sein, so dass beispielsweise die Unterseite und die Oberseite mit ihren Flächen parallel zueinander im gesamten Bereich des ersten Bindersitzbereiches verlaufen. Bevorzugt sind jedoch auf der Unterseite des ersten Befestigungsbereiches Materialanhäufungen, bevorzugt mindestens eine, weiter bevorzugt mindestens zwei, vorgesehen. Diese Materialanhäufungen korrespondieren bevorzugt mit einer auf einem nicht der Erfindung zuzurechnenden Gelenkgehäuseaußenteil angeordneten und dort umlaufend ausgebildeten Nut, in welche die mindestens eine mindestens Materialanhäufung auf der Unterseite des ersten Befestigungsbereiches, bevorzugt unterhalb des Bindersitzbereiches zur Anordnung gelangt.

Die vorliegende Erfindung betrifft weiterhin ein Verschiebegelenk, bevorzugt ein Gleichlaufverschiebegelenk, mit mindestens einem erfindungsgemäßen Balg. Weiterhin betrifft die vorliegende Erfindung eine Welle mit mindestens einem erfindungsgemäßen Balg. Der erfindungsgemäße Balg ist dabei bevorzugt auf der Welle vormontiert, weiter bevorzugt unter Spannung. Schließlich betrifft die vorliegende Erfindung eine Gelenkanordnung umfassend mindestens einen erfindungsgemäßen Balg, mindestens ein Verschiebegelenk und eine Welle.

Diese und weitere Vorteile der vorliegenden Erfindung werden anhand der nachfolgenden Figuren näher erläutert. Es zeigen:
- Fig. 1:: eine perspektivische Ansicht eines erfindungsgemäßen Rollbalges in einer ersten Ausführungsform;
- Fig. 2:: eine Draufsicht auf den Rollbalg gemäß Fig. 1;
- Fig. 3:: einen Querschnitt entlang I-I der Fig. 2 durch den Rollbalg gemäß Fig. 1;
- Fig. 4:: die Einzelheit II der Fig. 3;
- Fig. 5:: eine perspektivische Ansicht eines erfindungsgemäßen Rollbalges in einer zweiten Ausführungsform mit anders ausgebildeten Radialrippen;
- Fig. 6:: eine Draufsicht auf den Rollbalg gemäß Fig 5;
- Fig. 7:: einen Querschnitt durch einen Rollbalg gemäß Fig. 2, ähnlich Fig. 3 oben; und
- Fig. 8:: eine Einzelheit des ersten Befestigungsbereiches und des Übergangsbereiches des Rollbalges gemäß Fig. 5, ähnlich zu Fig. 4.

Zunächst sei vorausgeschickt, dass die in den Figuren dargestellten Ausführungsformen nicht beschränkend auszulegen ist. Vielmehr können die dort beschriebenen Merkmale untereinander und mit den zuvor beschriebenen Merkmalen zu weiteren Ausgestaltungen kombiniert werden. So können beispielsweise auch weniger Radialrippen oder aber weniger Stützrippen und umgekehrt vorgesehen sein und insbesondere auch nicht nur eine umlaufende Versteifungsrippe, sondern mehrere umlaufende Versteifungsrippen. So können beispielsweise zwei umlaufende Versteifungsrippen, im Wesentlichen parallel zueinander ausgebildet, vorgesehen sein, zwischen denen auch Stützrippen angeordnet sein können, aber nicht müssen. Auch können insbesondere der erste Befestigungsbereich und der zweite Befestigungsbereich anders ausgebildet sein und müssen nicht einander gegenüberliegende Positionselemente zur Definierung eines ersten bzw. eines zweiten Bindersitzbereiches aufweisen. Vielmehr können auch andere Ausgestaltungen wie umlaufende Rippen o. ä. vorhanden sein. Auch müssen die Versteifungsrippen und die Stützrippen und/oder Radialrippen, nicht miteinander fluchten, so dass diese eine gemeinsame Außenkante beziehungsweise Stirnfläche bilden. Und insbesondere kann die geometrische Ausgestaltung des Membranbereiches auch anders erfolgen. Des Weiteren sei darauf hingewiesen, dass die in der Figurenbeschreibung und den Ansprüchen angegebenen Bezugszeichen den Schutz der vorliegenden Erfindung nicht beschränken, sondern lediglich auf die in den Figuren gezeigten Ausführungsformen verweisen.

Allgemein kann der erfindungsgemäße Rollbalg aus einer Vielzahl unterschiedlicher Materialien hergestellt sein. Besonders bevorzugt sind diese ausgewählt aus einer Gruppe umfassend thermoplastische Elastomermaterialien auf Polyuretan-(TPU), Polyamid-(TPA), Polyolefin-(TPO), Polyester-(TPEE) Basis, einem thermoplastischen Elastomomer-Vulkanisat (TPV) oder aus einem thermoplastischen Polyetheresterelastomer (TEE). Das Faltenbalgmaterial kann dabei weiterhin sonstige Zusatzstoffe, insbesondere Additive zur Förderung der Diffusion o. ä. aufweisen. Alternativ kann als Balgmaterial auch ein elastomeres Material eingesetzt werden, wobei jedoch thermoplastische Elastomermaterialien bevorzugt sind. Ein bekanntes thermoplatisches Elastomermaterial zur Herstellung von Balgen ist unter dem Markennamen "Hytrel" der DuPont Company bekannt. Im Sinne der vorliegenden Erfindung können auch Mischungen von verschiedenen thermoplastischen Elastomeren bzw. Elastomermaterialien eingesetzt sein. Bevorzugt wird der erfindungsgemäße Rollbalg im Spritzgussverfahren hergestellt.

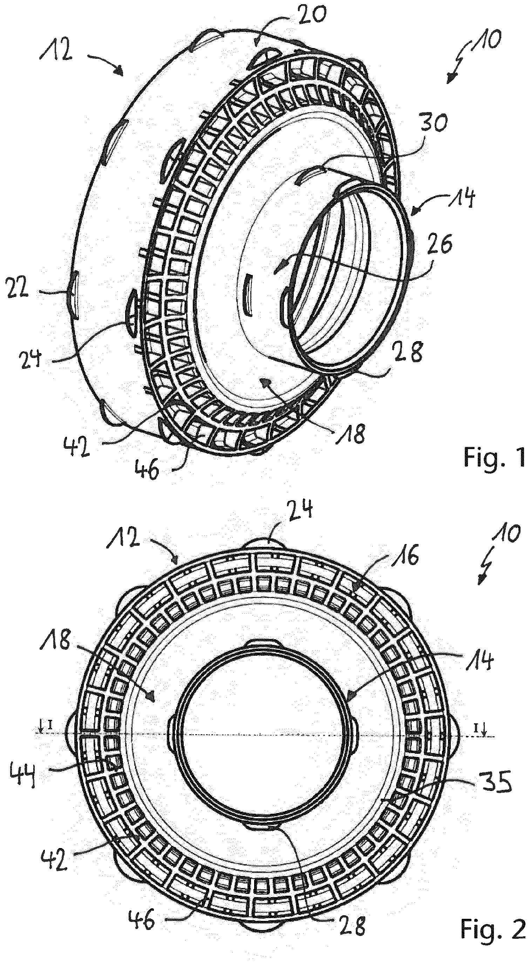

Fig. 1 zeigt nun einen erfindungsgemäßen Rollbalg 10 in einer perspektivischen Ansicht in einer ersten Ausführungsform mit einem ersten Befestigungsbereich 12 mit einem ersten Bindersitzbereich 20, der definiert ist durch zwei sich gegenüberliegende erste und zweite Positionierungselemente 22, 24. Im Bindersitzbereich 20 kann ein hier nicht gezeigtes Bindemittel, beispielsweise ein Kompressionsring, angeordnet werden, mit welchem der Rollbalg 10 auf einem Gelenkgehäuse beispielsweise eines Verschiebegelenks anordenbar ist.
Der Rollbalg 10 weist einen zweiten Befestigungsbereich 14 mit einem kleineren Durchmesser als der erste Befestigungsbereich 12 auf. Dieser ist ansonsten ähnlich ausgebildet wie der erste Befestigungsbereich 12 und weist sich gegenüberliegende, ohrförmig ausgebildete dritte und vierte Positionierungselemente 28, 30 und eine zwischen diesen definierte zweite Bindersitzfläche 26 auf. Über die zweite Bindersitzfläche 26 kann beispielsweise mittels eines Bindermittels, insbesondere eines Kompressionsrings, der Rollbalg 10 auf einer Welle montiert oder aber auch vormontiert werden, bevorzugt unter Spannung.

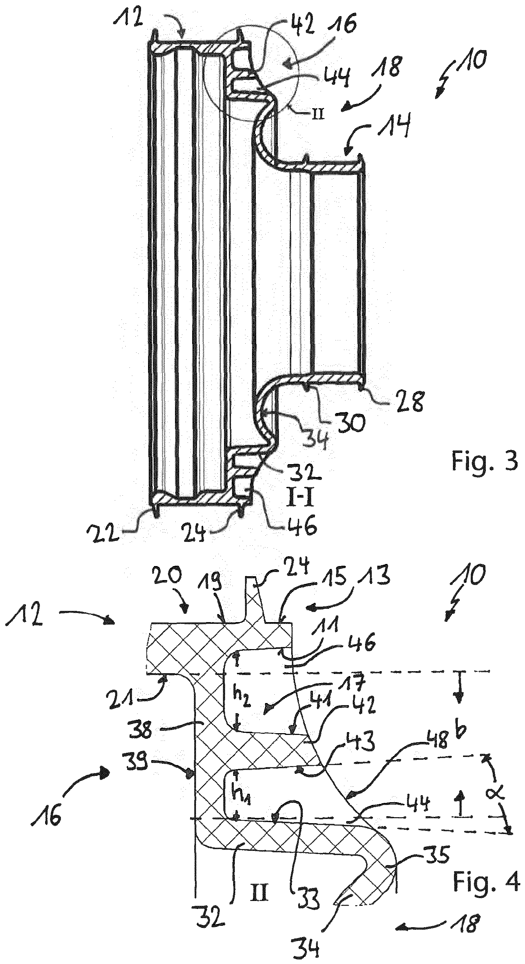

Unmittelbar benachbart dem ersten Befestigungsbereich 12 ist ein Übergangsbereich 16, dem wiederum ein Membranbereich 18 benachbart ist. Der Membranbereich 18 geht in den zweiten Befestigungsbereich 14 über. Im Übergangsbereich 16 ist genau eine Versteifungsrippe 42, umlaufend ausgebildet auf einer Außenseite 17 (siehe Fig. 4) des Übergangsbereiches 16, zu erkennen. Zwischen dem Membranbereich 18 und dieser Versteifungsrippe 42 sind eine Vielzahl von Stützrippen 44 angeordnet, wobei jede zweite dieser Stützrippen 44 fluchtend mit einer gemeinsamen Außenkante in Radialrippen 46 übergeht, die oberhalb der Versteifungsrippe 42 zwischen dieser und dem ersten Befestigungsbereich 12 angeordnet sind.

Fig. 2 zeigt den Rollbalg 10 gemäß Fig. 1 in einer Draufsicht, so dass die rotationssymmetrische Anordnung der Versteifungsrippe 42 als umlaufend, d. h. einen geschlossenen Kreisring bildend, und die Anordnung der Stützrippen 44 und der Radialrippen 46 gut erkennbar ist. Gut ist auch zu erkennen, dass etwa doppelt so viele Stützrippen 44 wie Radialrippen 46 vorliegen.

Fig. 3 zeigt nun einen Querschnitt entlang der Linie I-I der Fig. 2 durch den Rollbalg 10. Die Ausbildung des Membranbereiches 18 mit einem ersten Membranteil 32 und einem zweiten, trogartig ausgebildeten Membranteil 34 ist gut zu erkennen, ebenso auch der Übergang des Membranbereiches 18 in den zweiten Befestigungsbereich 14. Darüber hinaus ist auch zu erkennen, wie die Versteifungsrippe 42 mit der Stützrippe 44 und der Radialrippe 46 ausgebildet ist unter Bildung einer gemeinsamen Außenkante 48 (siehe Fig. 4).

Fig. 4 zeigt eine Einzelheit II der Fig. 3 im Detail. Der Übergangsbereich 16 ist gebildet durch einen Wandteil 38 mit einer Innenfläche 39, die einem hier nicht gezeigten Gelenkgehäuseaußenteil zuwendbar ist. Der Übergangsbereich 16 wird weiterhin gebildet durch die eine Versteifungsrippe 42. Der Wandteil 38 weist eine Breite b auf, die bestimmt wird durch eine Unterseite 21 des ersten Bindersitzbereiches 20 des ersten Befestigungsbereiches 12 und den Übergang in das erste Membranteil 32 des Membranbereiches 18. Eine obere Fläche 41 und eine untere Fläche 43 der Versteifungsrippe 42 sind leicht geneigt zueinander ausgebildet.

Das Membranteil 18 zeigt zwischen dem ersten Membranteil 32 und dem zweiten Membranteil 34, welches nur ausschnittsweise zu erkennen ist, die Ausbildung eines Rundungsteils 35, welches auch Fig. 2 zu entnehmen ist.

Zwischen der unteren Fläche 43 der Versteifungsrippe 42 und einer oberen Fläche 33 des ersten Membranteils 32 ist ein Winkel α gebildet, der 5° beträgt. Zudem ist dort die Ausbildung der Stützrippe 44 gut zu erkennen. Diese bildet eine versprungfreie gemeinsame Außenkante 48 mit dem ersten Membranteil 32 bzw. dem Rundungsteil 35 und einer Außenfläche der Versteifungsrippe 42. Zwischen einer oberen Fläche 41 der Versteifungsrippe 42 und einer unteren Fläche 11 eines Überstandes 13 des ersten Befestigungsbereiches 12 ist die Stützrippe 16 angeordnet. Auch diese weist eine gemeinsame Außenkante 48 mit der Versteifungsrippe 42 auf, so dass insgesamt eine durchgehende stetige, d. h. versprungfreie Außenkante 48, kurvenabschnittsartig gebildet, ausgebildet ist.

Eine Höhe h₁, bestimmt zwischen der oberen Fläche 33 des ersten Membranabschnittes 32 und der unteren Fläche 43 der Versteifungsrippe 42 ist dabei niedriger als eine Höhe h₂, bestimmt zwischen der oberen Fläche 41 der Versteifungsrippe 42 und der unteren Fläche 11 des Überstandes 13. Das Verhältnis der Höhen h₁:h₂ beträgt etwa 0,75. Damit ist die Versteifungsrippe 42 näher zum ersten Membranteil 32 des Membranbereiches 18 orientiert, so dass eine Höhe der Stützrippen 44, die der Höhe h₁ entspricht, geringer ausgebildet ist, als wenn die Versteifungsrippe 42 weiter verschoben auf den ersten Befestigungsbereich 12 angeordnet wäre. Hierdurch kann das Gewicht reduziert werden und andererseits kann dann die Versteifungsrippe 42 geringere tangentiale Kräfte aufnehmen, als wenn diese weiter verschoben auf den ersten Befestigungsbereich 12 angeordnet wäre.

Durch die Ausgestaltung der Radialrippe 46 als vollflächig untergreifend die untere Fläche 11 des Überstandes 13 einerseits als auch die Ausbildung des Überstandes 13 derart, dass ein wenn auch geringer Teilbereich des ersten Bindersitzbereiches 20 des ersten Befestigungsbereiches 12, und zwar mit einem zweiten Positionierungselement 24, im Bereich des Überstandes 13 und damit oberhalb der Radialrippe 46 liegt, wird zudem der Tendenz eines Abbiegens des Rollbalges 10 im Bereich einer hier nicht gezeigten Gelenkgehäuseaußenkante bei hohen Umdrehungszahlen entgegengewirkt. Der Überstand 13 weist eine obere Fläche 15 auf, die eben und versprungfrei mit einer Oberseite 19 des ersten Bindersitzbereiches 20 ausgebildet ist.

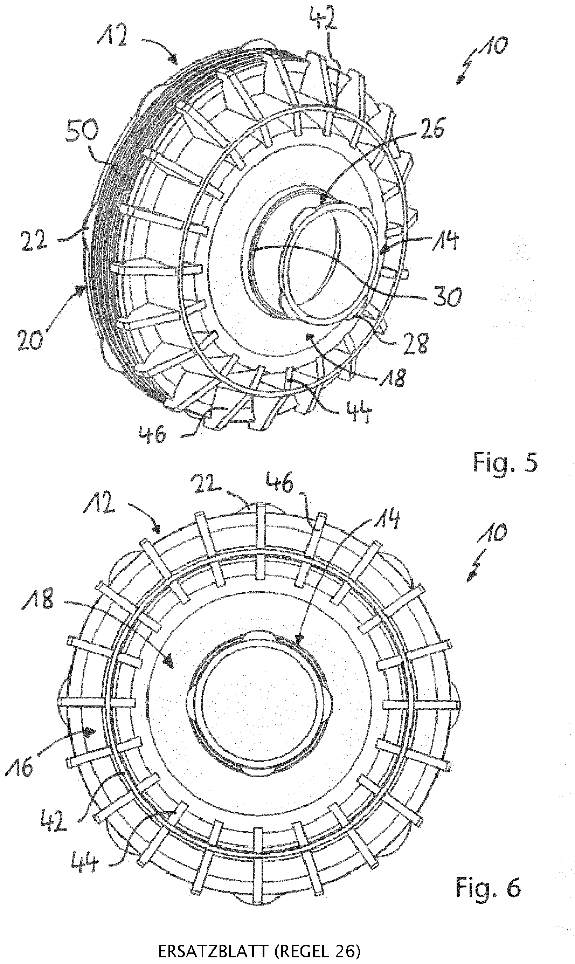

Fig. 5 zeigt eine insgesamt mit dem Bezugszeichen 10 bezeichnete zweite Ausführungsform eines erfindungsgemäßen Rollbalges. Bei dieser sind im Vergleich zu der ersten Ausführungsform gemäß den Fig. 1 bis 4 der erste Befestigungsbereich 12, der zweite Befestigungsbereich 14 als auch insbesondere die Verstärkungsrippen 46 anders ausgebildet. So weist der erste Befestigungsbereich 12 eine Vielzahl von umlaufenden Rippen 50, angeordnet im ersten Bindersitzbereich 20, auf. Der erste Bindersitzbereich 20 ist definiert durch ohrförmige erste Positionierungselemente 22, jedoch fehlen zweite Positionierungselemente 24, wie diese in der ersten Ausführungsform gemäß den Fig. 1 bis 4 vorhanden sind. Vielmehr wird eine Positionierungs- beziehungsweise Anlagefunktion durch die anders im Vergleich zu der ersten Ausführungsform ausgebildeten Radialrippen 46 zur Verfügung gestellt, die eine Oberseite des ersten Bindersitzbereiches 20 überragen. Weiterhin unterscheidet sich der zweite Befestigungsbereich 14 von demjenigen der ersten Ausführungsform gemäß den Fig. 1 bis 4 dahingehend, dass zwar wie auch dort dritte Positionierungselemente 28, ohrförmig ausgebildet und gleichmäßig verteilt in einem Randbereich des zweiten Befestigungsbereiches 14, jeweils paarweise gegenüberliegend, angeordnet sind, die vierten Positionierungselemente 30 jedoch anders ausgebildet sind, nämlich als umlaufende Positionierungsfläche, die aufgrund einer Materialverstärkung in diesen Bereich unmittelbar angrenzend an den Membranbereich 18 zur Verfügung gestellt ist.

Fig. 6 verdeutlicht in einer Draufsicht die Ausgestaltung der zweiten Ausführungsform des Rollbalges 10 gemäß Fig. 1. Besonders gut ist auch der Überstand der Radialrippen 46 über eine Oberseite des ersten Bindersitzbereiches 20 zu erkennen.

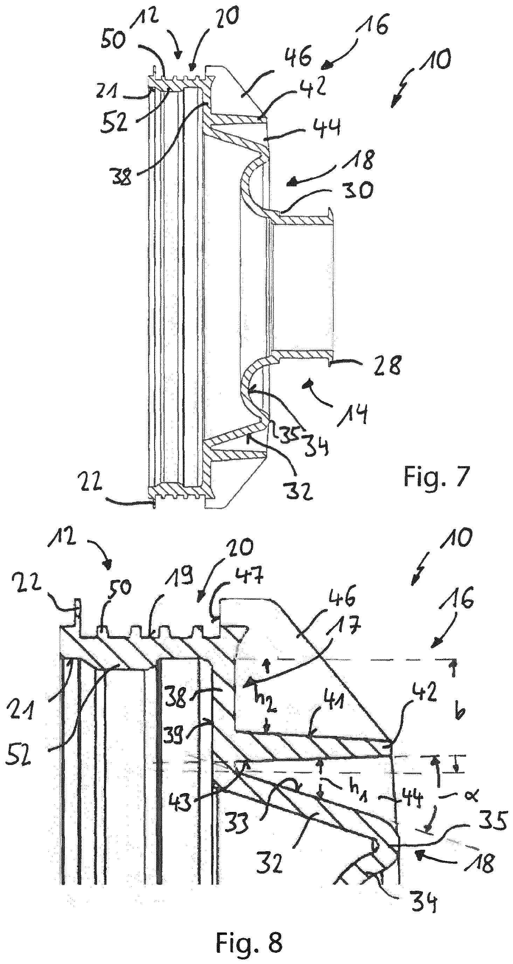

Die Fig. 7 zeigt nun einen Querschnitt durch die zweite Ausführungsform des Rollbalges 10, wobei Verstärkungsrippen 44 und Radialrippen 46 nicht geschnitten sind, sondern alleinig die Versteifungsrippe 42, die ebenso wie bei der ersten Ausführungsform gemäß den Fig. 1 bis 4 an einem Wandteil 38 des Übergangsbereiches 16 angeordnet ist. Allerdings ist die Versteifungsrippe 42 aufgrund der anderen Ausgestaltung der Radialrippen 46 bei der zweiten Ausführungsform länger ausgebildet als bei der ersten Ausführungsform gemäß den Fig. 1 bis 4.

Der erste Befestigungsbereich 12 ist mit seinem ersten Bindersitzbereich 20 und insgesamt vier umlaufenden Rippen 50 erkennbar, wobei auf einer Unterseite 21 des ersten Befestigungsbereichs 12 beziehungsweise des ersten Bindersitzbereiches 20 eine Materialanhäufung 52 zu erkennen ist, welche in eine hier nicht gezeigte, entsprechend ausgebildete, in einem Gelenkgehäuseaußenteil umlaufende Nut anordenbar ist. Ebenfalls gut ist der zweite Befestigungsbereich 14 mit den ohrförmigen dritten Positionierungselementen 28 und der wandförmig ausgebildeten Anlage- beziehungsweise Positionierungsfläche 30, die das vierte Positionierungselement darstellt, Fig. 7 zu entnehmen. Der Membranbereich 18 ist ähnlich dem Membranbereich 18 der ersten Ausführungsform gemäß den Fig. 1 bis 4 ausgebildet, allerdings weist ein erster Materialabschnitt 32 eine stärkere Abwinklung, bezogen auf das Wandteil 38 des Übergangsbereiches 16, auf als bei der ersten Ausführungsform. An den ersten Materialabschnitt 32 angrenzend ist ein Rundungsabschnitt 35 im Membranbereich 18 ausgebildet, der in einen zweiten Materialabschnitt 34 überführt, der ähnlich ausgebildet ist wie bei der ersten Ausführungsform gemäß den Fig. 1 bis 4.

Fig. 8 ist insbesondere die Ausgestaltung der mehreren Radialrippen 46 mit ihren Anlagebeziehungsweise Positionierungsflächen 47 zu entnehmen, die zusammen mit den ersten Positionierungselementen 22 den ersten Bindersitzbereich 20 mit seiner Oberseite 19 im ersten Befestigungsbereich 12 definieren. Auf der Oberseite 19 des ersten Bindersitzbereiches 20 sind die vier umlaufenden Rippen 50 angeordnet. Eine Höhe h₂ zwischen einer Oberfläche der umlaufenden Versteifungsrippe 42 und einer durch die Unterseite 21 des ersten Befestigungsbereich 12 beziehungsweise des ersten Bindersitzbereiches 20 definierten Linie ist etwa 6-fach so hoch wie eine Höhe h, ermittelt zwischen einer Unterfläche 43 der umlaufenden Versteifungsrippe 42 und einer Oberfläche 33 des ersten Materialabschnittes 32 des Membranbereiches 18. Dabei sind, wie auch schon bei Fig. 4, aus zeichnerischen Gründen die Höhen h₁ und h₂ beabstandet von einer Außenseite 17 des Übergangsbereiches 16 eingezeichnet. Die Höhen h₁ und h₂ werden jedoch unmittelbar auf der Außenseite 17 des Übergangsbereiches 16, damit gegenüberliegend der Innenfläche 39 des Wandteiles 38, bestimmt. Ein Winkel α ist zwischen der Unterfläche 43 der umlaufenden Versteifungsrippe 42 und der Oberfläche 33 des ersten Materialabschnittes 32 des Membranbereiches 38 bestimmbar und liegt bei etwa 20°. Ursächlich hierfür ist die stärkere Abwinklung des ersten Materialabschnittes 32 des Membranbereiches 18 im Vergleich zu der ersten Ausführungsform gemäß den Fig. 1 bis 4. Eine Breite b definiert die Breite oder Höhe des Wandabschnittes 38 des ersten Übergangsbereiches 16 als zwischen einer durch die Unterseite 21 des ersten Bindersitzbereiches 20 beziehungsweise des ersten Befestigungsbereiches 12 einerseits definierten Linie und einer durch den Übergangspunkt zu dem ersten Materialabschnitt 32 des Membranbereiches 18 gehenden hierzu parallelen Linie.

Mit der vorliegenden Erfindung ist ein Rollbalg zur Verfügung gestellt, welcher insbesondere bei hohen Umdrehungszahlen eine verbesserte radiale Festigkeit aufweist, so dass dieser dem aufgrund der hohen Zentrifugalkräfte entstehenden Fettdruck entgegenwirken kann und zudem auch die auf das Balgmaterial selbst wirkenden Zentrifugalkräfte hilft abzutragen. Letztendlich weist der erfindungsgemäße Rollbalg eine erhöhte Lebensdauer im Vergleich zu aus dem Stand der Technik bekannten Rollbalgen zumindest im Bereich hoher Umdrehungszahlen auf.

## Patentansprüche

1. Rollbalg (10) mit einem ersten Befestigungsbereich (12), einem zweiten Befestigungsbereich (14), einem dem ersten Befestigungsbereich (12) benachbarten Übergangsbereich (16) und einem sich daran anschließenden Membranbereich (18), umfassend ein erstes Membranteil (32) und ein zweites Membranteil (34), die über ein Rundungsteil (35) miteinander verbunden sind, **dadurch gekennzeichnet, dass** auf einer Außenseite (17) des Übergangsbereiches (16) mindestens eine umlaufende Versteifungsrippe (42) und zwischen Versteifungsrippe (42) und dem ersten Membranteil (32) des Membranbereiches (18) eine Mehrzahl von Stützrippen (44) angeordnet sind, und wobei der Übergangsbereich (16) die Versteifungsrippe (42) und ein Wandteil (38) umfasst, an dem die Versteifungsrippe (42) angeordnet ist, wobei das Wandteil (38) an das erste Membranteil (32) des Membranbereiches (18) unmittelbar anschließt.

2. Rollbalg (10) gemäß Anspruch 1, **dadurch gekennzeichnet, dass** die Versteifungsrippe (42) an dem Wandteil (38) des Übergangsbereiches (16) im Wesentlichen senkrecht zu einer Innenfläche (39) des Wandteils (38) angeordnet ist.

3. Rollbalg (10) gemäß einem oder mehreren der vorhergehenden Ansprüche, **dadurch gekennzeichnet, dass** die Versteifungsrippe (42) am Übergangsbereich (16) verschoben auf das erste Membranteil (32) des Membranbereiches (18) angeordnet ist.

4. Rollbalg (10) gemäß einem oder mehreren der vorhergehenden Ansprüche, **dadurch gekennzeichnet, dass** zwischen einer unteren Fläche (43) der Versteifungsrippe (42) und einer oberen Fläche (33) eines ersten Teilabschnittes (32) des Membranbereiches (18) ein Winkel α in einem Bereich zwischen etwa 0° und etwa 25° gebildet ist.

5. Rollbalg (10) gemäß Anspruch 4, **dadurch gekennzeichnet, dass** die Stützrippen (44) und die mindestens eine Versteifungsrippe (42) im Wesentlichen senkrecht zueinander angeordnet sind.

6. Rollbalg (10) gemäß einem oder mehreren der vorhergehenden Ansprüche, **dadurch gekennzeichnet, dass** oberhalb der Versteifungsrippe (42) eine Mehrzahl von Radialrippen (46) angeordnet sind.

7. Rollbalg (10) gemäß Anspruch 6, **dadurch gekennzeichnet, dass** die Stützrippen (44) und die Radialrippen (46) im Wesentlichen fluchtend miteinander ausgebildet sind.

8. Rollbalg (10) gemäß einem oder mehreren der Ansprüche 6 oder 7, **dadurch gekennzeichnet, dass** mehr Stützrippen (44) als Radialrippen (46) vorgesehen sind.

9. Verschiebegelenk mit mindestens einem Rollbalg (10) gemäß einem oder mehreren der Ansprüche 1 bis 8.

10. Welle mit mindestens einem Rollbalg (10) gemäß einem oder mehreren der Ansprüche 1 bis 8.

11. Gelenkanordnung umfassend mindestens einen Rollbalg (10) gemäß einem oder mehreren der Ansprüche 1 bis 8, mindestens ein Verschiebegelenk und eine Welle.

## Claims

1. Rolling boot (10) that has a first fastening region (12), a second fastening region (14), a transition region (16) adjacent to the first fastening region (12), and an adjoining membrane region (18) comprising a first membrane subsection (32) and a second membrane subsection (34), which are connected to each other via a rounding part (35), **characterized in that** at least one circumferential reinforcement rib (42) is located on the outer surface (17) of the transition region (16) and numerous supporting ribs (44) are located between reinforcement rib (42) and the first subsection (32) of the membrane region (18), and wherein said transition region (16) comprises the reinforcement rib (42) and a wall part (38), on which the reinforcement rib (42) is arranged, wherein the wall part (38) directly adjoins the first subsection (32) of the membrane region (18).

2. Rolling boot (10) according to claim 1, **characterized in that** the reinforcement rib (42) is located on a wall portion (38) of the transition region (16), substantially perpendicular to an inner surface (39) of the wall portion (38).

3. Rolling boot (10) according to any one or more of the preceding claims, **characterized in that** the reinforcement rib (42) is located at the transition region (16), displaced toward a first subsection (32) of the membrane region (18).

4. Rolling boot (10) according to any one or more of preceding claims, **characterized in that** an angle α in a range of approximately 0° to approximately 25° is formed between a lower surface (43) of the reinforcement rib (42) and an upper surface (33) of a first subsection (32) of the membrane region (18).

5. Rolling boot (10) according to claim 4, **characterized in that** the supporting ribs (44) and the at least one reinforcement rib (42) are substantially perpendicular to one another.

6. Rolling boot (10) according to any one or more of preceding claims, **characterized in that** numerous radial ribs (46) are located above the reinforcement rib (42).

7. Rolling boot (10) according to claim 6, **characterized in that** the supporting fins (44) and the radial ribs (46) are substantially flush to one another.

8. Rolling boot (10) according to any one or more of claims 6 or 7, **characterized in that** more supporting ribs (44) than radial ribs (46) are provided.

9. Slip joint that has at least one rolling boot (10) according to any one or more of the claims 1 to 8.

10. Shaft that has at least one rolling boot (10) according to any one or more of the claims 1 to 8.

11. Joint assembly comprising at least one rolling boot (10) according to any one or more of the claims 1 to 8, at least one slip joint, and one shaft.

## Revendications

1. Soufflet tubulaire (10) avec une première zone de fixation (12), une deuxième zone de fixation (14), une zone de transition (16) voisine de la première zone de fixation (12) et une zone de membrane (18) se raccordant à celle-ci et comprenant un premier élément de membrane (32) et un deuxième élément de membrane (34) qui sont reliés entre eux par une partie de courbure (35), **caractérisé en ce qu'**au moins une nervure de renforcement (42) est disposée sur une face extérieure (17) de la zone de transition (16) et qu'une multitude de nervures de support (44) sont disposées entre la nervure de renforcement (42) et le premier élément de membrane (32) de la zone de membrane (18), la zone de transition (16) comprenant la nervure de renforcement (42) et un élément de paroi (38) sur lequel la nervure de renforcement (42) est disposée, cet élément de paroi (38) se raccordant directement au premier élément de membrane (32) de la zone de membrane (18).

2. Soufflet tubulaire (10) selon la revendication 1, **caractérisé en ce que** la nervure de renforcement (42) est disposée sur l'élément de paroi (38) de la zone de transition (16) sensiblement perpendiculairement à une surface intérieure (39) de l'élément de paroi (38).

3. Soufflet tubulaire (10) selon une ou plusieurs des revendications précédentes, **caractérisé en ce que** la nervure de renforcement (42) sur la zone de transition (16) est disposée de manière décalée au-dessus du premier élément de membrane (32) de la zone de membrane (18).

4. Soufflet tubulaire (10) selon une ou plusieurs des revendications précédentes, **caractérisé en ce qu'**une surface inférieure (43) de la nervure de renforcement (42) et une surface supérieure (33) d'un premier segment (32) de la zone de membrane (18) forment entre elles un angle α situé sur une plage d'environ 0° à environ 25°.

5. Soufflet tubulaire (10) selon la revendication 4, **caractérisé en ce que** les nervures de support (44) et l'au moins une nervure de renforcement (42) sont disposées sensiblement perpendiculairement entre elles.

6. Soufflet tubulaire (10) selon une ou plusieurs des revendications précédentes, **caractérisé en ce qu'**une multitude de nervures radiales (46) sont disposées au-dessus de la nervure de renforcement (42).

7. Soufflet tubulaire (10) selon la revendication 6, **caractérisé en ce que** les nervures de support (44) et les nervures radiales (46) sont sensiblement alignées entre elles.

8. Soufflet tubulaire (10) selon une ou plusieurs des revendications 6 et 7, **caractérisé en ce qu'**il est prévu davantage de nervures de support (44) que de nervures radiales (46).

9. Articulation prismatique avec au moins un soufflet tubulaire (10) selon une ou plusieurs des revendications 1 à 8.

10. Arbre avec au moins un soufflet tubulaire (10) selon une ou plusieurs des revendications 1 à 8.

11. Dispositif d'articulation comprenant au moins un soufflet tubulaire (10) selon une ou plusieurs des revendications 1 à 8, au moins une articulation prismatique et un arbre.
